# EUROPEAN PATENT APPLICATION

(11) **EP 0 835 691 A1**
(43) Date of publication of application: **15.04.1998**
(21) Application number: 97305725.0
(22) Date of filing: 30.07.1997
(51) Int. Cl.: B04B 1/20, H02H 9/00

(54) **Control system and method for electrically operated equipment**

(30) Priority: 14.08.1996 US 689843
(71) Applicant: M-I Drilling Fluids L.L.C., Houston, Texas 77242 (US)
(72) Inventor: Phillips, Victor, Oklahoma City, Oklahoma 73120 (US); Chang, Che-Liang, Edmond, Oklahoma 73003 (US); Martin, Troy, Oklahoma City, Oklahoma 73120 (US)
(74) Representative: Hale, Peter

(57) **Abstract**

A system and method for controlling electrical equipment mounted on a platform (10) in a hazardous environment. Control signals are produced by a console (86) at or near the platform that correspond to functions of the equipment. These control signals are passed to control circuitry (70) disposed at a remote location out of the hazardous environment. The control circuitry generates corresponding output signals for controlling the operation of the equipment. Current limiting circuitry (76) is provided between the console and the control circuitry to reduce the current of the control signals to values that will not produce sparks sufficient to ignite flammable fluids such as natural gas.

## Description

The present invention relates to a control system and method for electrically-operated equipment operating in a hazardous environment and, more particularly, to a control system and method for controlling the operation of the equipment while minimizing the danger of ignition of combustible gas, or the like, in the vicinity of the equipment.

There are many situations in which electrically-operated equipment, and control systems for the equipment, are located in a hazardous, or potentially hazardous, environment. For example, in oil fields in which natural gas is being processed, electrically-operated equipment, as well as electrically-operated control systems for the equipment, are often in the vicinity of the gas. Obviously, any electrical sparks that are generated by the equipment, or the electrical control system for the equipment, could ignite the gas and cause a disaster.

Decanting centrifuges are often used in hazardous environments, such as in oil fields, to process a mixture of two constituents, and separate one from the other. Typical applications of this type of centrifuge in this environment are for the removal of dirt, sand, shale, abrasive cuttings, and/or silt particles (hereinafter referred to as " solid particles") from drilling fluid after the fluid has been circulated through a drilling bit to lift the cuttings to the surface in an oil field drilling operation.

These types of centrifuges feature a rotating bowl and a spiral screw conveyer disposed inside the bowl which rotates in the same direction as the bowl and at a different speed. The mixture, consisting of the drilling fluid and relatively fine solid particles entrained therein, enters the bowl and the centrifugal forces direct and hold it against the inner wall of the bowl in a "pool" while the fluid is displaced to one end portion of the bowl for discharge. The solid particles settle against the wall and are transported, or displaced, by the screw conveyor to discharge ports extending through the opposite end portion of the bowl for discharge. There are several parameters involved in the operation of these type of centrifuges, such as bowl speed and torque, conveyor speed and torque, fluid pump rate, fluid viscosity or dilution, and fluid solids content and properties. Since the operational goals of the centrifuge itself are fairly precise, it is important that the centrifuge be precisely controlled so that its operation is optimized in response to variations in the above parameters. To this end, fairly sophisticated control systems for the centrifuges have evolved which are usually mounted on the skid that supports the centrifuge and which include electrical drive motors, switches, circuit boards, meters, and other electrical components. An example of such a control system is fully disclosed in applicant's U.S. patent application Serial Number 08/622,417 filed March 20, 1996, the disclosure of which is incorporated by reference.

However, when the decanting centrifuge is used in oil fields for separating solid particles from drilling fluid, as described above, a hazardous environment is often present in the form of combustible fluid being processed in the vicinity of the centrifuge such as, for example, when natural gas is present in the drilling mud and breaks out during operation of the centrifuge. Thus, it is critical that any sparks that could be generated by the electrical components associated with the control system for the centrifuge be eliminated, minimized or confined to eliminate the possibility of ignition of the gas.

Prior art techniques that address this problem include the provision of explosion-proof boxes located on the centrifuge skid to house the electrical components. However, these boxes must be very large, are very expensive, and may not dissipate the excessive heat produced by the components.

Another problem associated with the use of a sophisticated control system for centrifuges is that, if the control system is mounted on the centrifuge skid, the heavy vibrations caused by the centrifuge adversely affect the fragile electrical components associated with the control system.

Therefore, what is needed is a control system for electrically-operated equipment in a hazardous environment in which the electrical energy used to control the electrical components associated with the equipment and the control system is reduced so as not to generate incendiary sparks sufficient to ignite natural gas, or the like, in the vicinity of the equipment. Also what is needed is a control system for a centrifuge in which the electrical components associated with the control system are isolated from the hazardous environment and the vibrations caused by the centrifuge.

The invention is defined in the accompanying independent claims some preferred features are recited in the dependent claims.

The present invention, accordingly, provides a system and a method for controlling electrically-operated equipment mounted on a support platform in a hazardous environment. The control system includes a control console mounted on or near the platform in the hazardous environment for producing electrical signals corresponding to functions of the equipment. Control circuitry is provided at a location remote from the platform and out of the hazardous environment for responding to the signals from the control console and generating electrical output signals for controlling the operation of the equipment. Current limiting circuitry is connected between the console and the control circuitry for reducing the current of the signals passing from the console to the control ciircuitry to values that will not ignite flammable fluids such as natural gas.

As a result, major advantages are achieved with the system and method of the present invention since the equipment, as well as the control system for the equipment, can be used without incurring the risk of igniting any combustible liquid or gas that is being processed or that is otherwise in the vicinity of the equipment. A significant cost advantage is also achieved with the system and method of the present invention since the above is achieved without having to enclose the control console in an explosive-proof box, or the like. Still another advantage of the system and method of the present invention is that the control circuitry for the equipment is located a remote distance from the equipment and is therefore isolated from the hazardous environment and from any vibrations caused by the equipment.

The invention can be put into practice in various ways some of which will now be described with reference to the single accompanying drawing which is a schematic view depicting a centrifuge and a control system for the centrifuge including features of the present invention. equipment, which, for the purpose of example, is a decanting centrifuge, shown in general by the reference numeral 12.

The centrifuge 12 includes an elongated bowl 14 supported for rotation about its longitudinal axis. The bowl 14 has two open ends 14a and 14b, with the open end 14a receiving a drive shaft 16 for rotating the bowl. It is understood that a longitudinal passage extends through the drive flange for receiving a feed tube, or the like, (not shown) for introducing a feed slurry which, for the purposes of example, is a mixture of fluid and dispersed solid particles, into the interior of the bowl 14.

A screw conveyor 18 extends within the bowl 14 in a coaxial relationship thereto and is supported for rotation within the bowl in a manner to be described. To this end, a flanged shaft 20 is disposed in the end 14b of the bowl and receives the drive shaft (not shown) of an external planetary gear box 21 for rotating the screw conveyor 18 in the same direction as the bowl but at a different speed.

It is understood that the conveyor 18 receives the slurry from the above-mentioned feed tube and that one or more openings (not shown) extend through the wall of the conveyor so that the centrifugal forces generated by the high speed rotation of the bowl 14 and the conveyor 18 causes the slurry to gravitate radially outwardly and pass through the latter openings and into the annular space between the conveyor and the bowl. The liquid portion of the slurry is displaced to the end 14b of the bowl 14 while the entrained solid particles in the slurry settle towards the inner surface of the bowl due to the G forces generated. These solid particles are then scraped and transported by the screw conveyor 18 back towards the end 14a of the bowl for discharge through a plurality of discharge ports (not shown) formed through the wall of the bowl 14 near its end 14a. A plurality of weirs (not shown) are provided near the end 14b of the bowl 14 for discharging the separated liquid. Although not shown in the drawings, it is understood that the centrifuge 12 would be enclosed in a housing or casing.

The drive shaft 16 is supported by a bearing 22, and a variable speed main drive AC motor 24 has an output shaft 24a which is connected to the drive shaft 16 by a drive belt 26 and therefore rotates the bowl 14 of the centrifuge 12 at a predetermined operational speed. The shaft 20 is supported by a bearing 28, is hollow, and supports the end 14b of the rotating bowl 14 while allowing the output shaft of the gear box 21 to drive the conveyor 18. The conveyor 18 is supported by bearings (not shown) in the ends 14a and 14b of the bowl 14.

A sun wheel 30 is provided which is connected to the input of the gear box 21, and a back drive AC motor 34 has an output shaft 34a which is connected to the sun wheel 30 by a drive belt 36. Rotation of the motor 34 causes corresponding rotation of the screw conveyor 18, and the planetary gear box 21 functions to establish a differential rotational speed of the conveyor 18 with respect to the bowl 14. A coupling 38 is provided on the shaft of the sun wheel 30 and a limit switch 38a is connected to the coupling which functions in a conventional manner to shut off the centrifuge 12 when excessive torque is applied to the gearbox 21.

A tank 40 is provided for receiving and containing the feed slurry being processed, and a conduit 42 connects an outlet opening formed in the lower portion of the tank to the drive shaft 16. The conduit 42 extends through the drive shaft 16 and to the above-mentioned feed tube provided in the conveyor 18 to enable feed slurry to pass through the conduit and into the interior of the conveyor 18. A pump 44 is connected to the conduit 42 and is driven by a drive motor 46, for pumping the slurry from the tank 40, through the conduit 42 and into the centrifuge 12. The drive motor 46 is engaged by a magnetic starter 47 for controlling same in a manner to be explained.

A flow meter 48 is connected to the conduit 42 for metering the slurry flow through the conduit, and a control valve 50 is connected to the conduit downstream of the meter 48 for controlling the flow rate of the slurry. A conduit 52 registers with the conduit 42 for introducing a dilution agent, such as water or diesel, into the conduit under the control of a valve 52a disposed in the conduit 52. As a result, the viscosity of the slurry can be reduced so that sedimentation will occur more quickly and the centrifuge 12 can be flushed out when needed. It is understood that the motors 24, 34 and 46 are mounted in explosion proof housings in accordance with industry standards.

It is understood that a vibration detector could be mounted on centrifuge 12 and a pair of accelerometer sets could be connected at or near the bearings 22 and 28. Since these components, as well as the centrifuge 12 and its other associated components discussed above, are fully disclosed in the above-identified U.S. patent application they will not be described in any further detail.

It is also understood that an electrical power source (not shown) is provided in the vicinity of the skid 10 to supply relative high power to the motor 46, with the power source being connected to the motor by an explosive-proof, amored-sheath cable, in a conventional manner.

A housing 60 is located a distance from the skid 10 and contains two variable speed drive units 62 and 64 that are connected to the motors 24 and 34 by two cables 66 and 68, respectively. The drive units 62 and 64 function in a conventional manner to vary the frequency and the voltage applied to their respective motors 24 and 34. This enables the speed of, and the torque applied to, the bowl 14 and the conveyor 18, respectively, to be continuously varied as necessary to maintain optimum operating conditions. The cables 66 and 68 are relatively large, are designed to conduct the relative high current needed to operate the motors 24 and 34, and are provided with armor sheaths to render them explosion proof.

The control circuitry for the drive units 62 and 64 is located in the housing 60 and is shown schematically by the reference numeral 70. The circuitry 70 includes timers, microprocessors, and associated components that produce signals that control the drive units 62 and 64 in the foregoing manner and therefore the operation of the motors 24 and 34. Since these components are conventional and, per se, do not form a part of the present invention the control circuitry 70 is shown only schematically.

The control circuitry 70 receives AC power from a power source 72 located externally of the housing 60 and connected to the circuitry by a cable 73 A pair of cables (not shown) respectively connect the control circuitry 70 to the drive units 62 and 64 to supply the relatively high-current signals from the circuitry to the drive units. The distance between the housing 60 and the skid 10 is selected so that any sparks produced as a result of the AC power from the source 72 and the cable 73 entering the housing, and the relatively high-current signals passing from the control circuitry, via the cables to the drive units, 62 and 64, respectively, will not ignite any combustible gases that might be present in the vicinity of the skid 10.

A current limiting circuitry 76 is provided which, along with the control circuitry 70 is located in a barrier box 80 disposed in the housing 60. The current limiting circuitry 76 includes a series of barriers, or current limiting devices, such as zener diodes, or the like (not shown), respectively connected to the components of the control circuitry 70 for limiting the magnitude of the electrical energy, such as the current, of each signal passing through the control circuitry, as will be explained. Since the current limiting circuitry 76 is conventional and does not, per se, form a part of the present invention it is shown only schematically and will not be described in any further detail. In this context, it is understood that the expression "low-current" signals used herein means that the current is low enough to render the circuit "intrinsically safe" i.e., low enough not to ignite a combustible gas in the immediate vicinity of the components, in accordance with industry standards.

A control console 86 is provided on or near the skid 10 for the centrifuge 12 and contains components, such as switches and controls, that produce signals for activating the control circuitry 70. The control console 86 has several output terminals, which terminals are connected to the current limiting circuitry 76 by a series of conductors 88, only one of which is shown. The current limiting circuity 76 functions to limit the magnitude of the current of each signal passing from the console 86, and the limited-current signals are passed from the current limiting circuitry 76 to the control circuitry 70 via a series of conductors 90, only one of which is shown. These control signals from the control console 86 control the above-described functions of the control circuitry 70, and therefore the operation of the drive units 62 and 64.

It is understood that meters and other visual indicators are also provided on the console 86 for providing visual displays of the functions of the motors 24 and 34. To this end, a series of conductors 91, only one of which is shown, connect the control circuitry 70 to the current limiting circuitry; and a series of conductors 92, only one of which is shown, connect the current limiting circuitry 76 to the console 86. Thus, low current signals corresponding to the functions of the control circuitry 70 are supplied to the meters, or other visual indicators, at the console 86 to activate same.

A cable 94 extends from the power source 72 to the magnetic starter 47 for passing a relatively high-voltage power signal to the starter for activating the motor 46, in a conventional manner. Also, a cable 96 passes from the current limiting circuit 76 to the starter for passing a corresponding reduced-current signal from the control circuitry 70 to turn the motor 46 on or off as required.

It is also understood that, in actual practice, the number of conductors in each series of conductors 88, 90, 91 and 92 will vary depending on the control functions involved which, at a minimum, would include control of the starting, the stopping and the speed of the bowl 14 and the conveyor 18.

In operation, the bowl 14 and the conveyor 18 are activated, and their speed is controlled, by engaging corresponding switches and controls on the console 86, resulting in corresponding signals being passed from the console, through the current limiting circuitry 76, which reduces the current of each of the latter signals, and to the control circuitry 70 to activate the associated components of the latter circuitry. The control circuitry 70 produces corresponding, relatively high-current, output signals which are passed to the drive units 62 and 64.

Upon being activated, the drive units 62 and 64 generate high-current signals for starting, driving, and controlling the speed of the motors 24 and 34, respectively which signals are sent through the explosion-proof cables 66 and 68 to the motors 24 and 34 to initiate the rotation of the bowl 14 and the conveyor 18, respectively, and control their respective speeds. The motor 46, and therefore the pump 44, are turned on in the manner described above causing the slurry, which for the purpose of example, will be assumed to be a mixture of fluid and entrained solid particles, to be pumped from the tank 40, via the conduit 42, to the bowl 14 of the centrifuge 12.

As a result of the rotation of the bowl 14, the centrifugal force thus produced forces the slurry radially outwardly so that it passes through the above-mentioned openings in the conveyor 18 and into the annular space between the conveyor and the bowl 14. The fluid portion of the slurry is displaced to the end 14b of the bowl 14 for discharge from the bowl, while the entrained solid particles in the slurry settle towards the inner surface of the bowl due to the G forces generated, and are scraped and transported by the screw conveyor 18 back towards the end 14a of the bowl for discharge through the discharge ports.

The conductors 91 pass signals corresponding to the functions of the control circuitry to the current limiting circuitry 76 and the conductors 92 pass corresponding low current signals from the current limiting circuitry 76 to the meters of the console 86 to provide visual indications of the operations.

As a result of the foregoing, all of the signals passing to and from the console 86 pass through the current limiting circuitry 76 and are therefore reduced in current to eliminate the possibility of sparks caused by an electrical short, or the like, extending to the console 86 at the skid 10 which are sufficient to ignite any combustible material in the vicinity of the skid 10. Also, this is achieved without incurring the relatively high expense of mounting the control console in an explosion-proof box, and the like. Moreover, any sparks occurring in the vicinity of the housing 60 as a result of the introduction of the AC power from the source 72 into the housing 60, or the passage of the relatively high-current signals from the control circuitry 70 to the drive units 62 and 64, will be far enough removed from the skid 10 to eliminate the ignition of any combustible material in the vicinity of the skid.

As a result of the foregoing, the sophisticated control system described above can be used to operate the centrifuge 12 without incurring the risk of igniting any combustible fluid that is being processed or that is otherwise in the vicinity of the centrifuge. Also, since the major components in the control system for the centrifuge 12 are located a remote distance from the centrifuge, they are isolated from the vibrations caused by the centrifuge. It is noted that the above advantages of the present invention are realized without compromising the other advantages of the system set forth in the above-cited patent application.

It is understood that variations in the foregoing can be made within the scope of the invention. For example, the control system of the present invention is not limited to use with a centrifuge, but is equally applicable to any type of electrically-operated equipment operating in a hazardous environment. Also, each motor 24 and/or 34 can be a fixed speed motor, or a hybrid, i.e., it could have a variable speed main drive and a fixed speed back drive. Of course, the drive units 62 and 64 would be selected according to the particular type of motor they would be driving. Also, the cable 74b can be eliminated and the drive unit 62 can receive the high current signals from the cable 74a via a bus, or the like, in a conventional manner. Further, this technology could be used for conventional, non-variable speed motors, with all starters, etc., mounted in a satellite, non-explosion-proof box in a safe area which would eliminate the need for expensive explosion-proof boxes on the skid 10.

Other modifications, changes and substitutions are intended in the foregoing disclosure and in some instances some features of the invention will be employed without a corresponding use of other features.

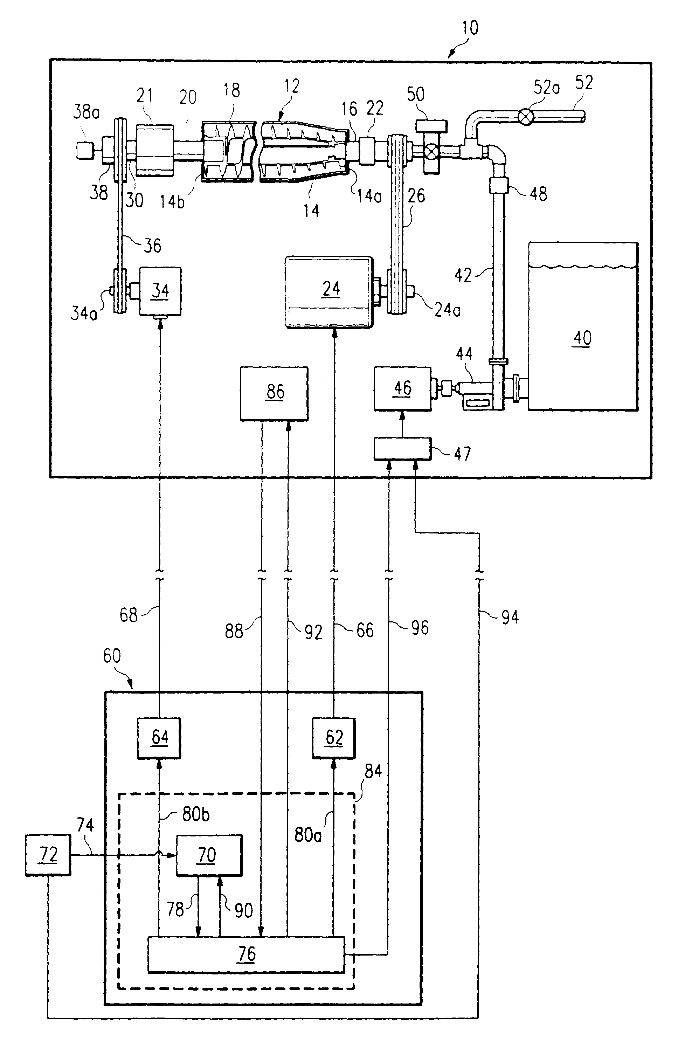

## Claims

1. A system for controlling electrically operated equipment mounted on a support platform (10) in a hazardous environment, the system comprising a control console (86) mounted on or near the platform (10) in the hazardous environment for producing electrical signals corresponding to a function of the equipment, control circuitry (70) for responding to the signals from the control console (86) and generating corresponding electrical output signals for controlling the operation of the equipment, and current limiting circuitry (76) connected between the control console (86) and the control circuitry (70) for limiting the current of the signals passing from the control console (86) to the control circuitry (70).

2. The system of claim 1 wherein the control circuitry (70) and the current limiting circuitry (76) are located at a location remote from the platform (10) and out of the hazardous environment.

3. The system of claim 1 or claim 2, wherein the current of the signals passing from the control console (86) to the control circuitry (70) is limited to the extent that any sparks generated by the control circuitry (70) will not ignite an inflammable fluid in the vicinity of the platform.

4. The system of any of claims 1, 2 or 3, wherein the control circuitry (70) generates output signals corresponding to the functions of the control circuitry (70), the system further comprising a conductor (92) for passing the latter signals to the control console (86) for providing a visual indication of the functions, said current limiting circuitry (76) limiting the current of the latter signals.

5. The system of any of claims 1 to 4, wherein the equipment is a centrifuge (12) having a rotatable bowl (14), a rotatable conveyor (18), and variable frequency AC motors (24,34) respectively connected to the bowl (14) and the conveyor (18) for rotating same, and further comprising drive units (62,64) for varying the frequency and the voltage applied to their respective motors (24,34), to continuously vary the speed of, and the torque applied to, the bowl (14) and the conveyor (18).

6. The system of claim 5, wherein the output signals from the control circuitry correspond to the starting, stopping and speed of the drive motors (24,34).

7. The system of claim 5 or claim 6, wherein the drive units (62,64) are located at a remote location out of the hazardous environment and are electrically connected to the current limiting circuitry (76) for receiving control signals from the control circuitry (70), and further comprising explosion-proof cables (68,66) respectively connecting the drive units to the motors.

8. A method of controlling electrically operated equipment mounted on a support platform (10) in a hazardous environment, the method comprising the steps of producing an electrical signal in the vicinity of the platform (10) corresponding to a function of the equipment, reducing the current of the signal, and passing the reduced current signal to a control unit for generating a corresponding output signal for controlling the operation of the equipment, and reducing the current of the output signal.

9. The method of claim 8, wherein the step of generating the output signal is dome at a location remote from the platform and out of the hazardous environment.

10. The method of claim 8 or 9, wherein the current of the signal is reduced to the extent that any sparks generated by the control circuitry will not ignite an inflammable fluid in the vicinity of the platform.
